# EUROPÄISCHE PATENTSCHRIFT

(11) **EP 3 400 834 B1**
(45) Veröffentlichungstag und Bekanntmachung des Hinweises auf die Patenterteilung: **14.10.2020**
(21) Anmeldenummer: 18171464.3
(22) Anmeldetag: 09.05.2018
(51) Int. Cl.: A47C 1/024, A47C 20/04, A47C 7/54

(54) **SCHWENKBESCHLAG UND MÖBEL**
PIVOT FITTING AND FURNITURE
FERRURE PIVOTANTE ET MEUBLE

(30) Priorität: 11.05.2017 DE 102017110250
(43) Veröffentlichungstag der Anmeldung: 14.11.2018
(73) Patentinhaber: Hettich Franke GmbH & Co. KG, 72336 Balingen-Weilstetten (DE)
(72) Erfinder: GRATHWOL, Steffen, 72336 Balingen (DE); MAIER, Philipp, 72184 Eutingen im Gäu (DE)
(74) Vertreter: Dantz, Jan Henning

(56) Entgegenhaltungen:
- DE-A1- 3 129 606
- DE-B3-102007 031 378
- DE-U1- 29 922 329
- DE-U1-202014 000 212

## Beschreibung

Die vorliegende Erfindung betrifft einen Schwenkbeschlag, insbesondere für bewegliche Möbelteile an Möbeln gemäß dem Oberbegriff des Anspruchs 1 sowie ein Möbel.

Derartige Schwenkbeschläge dienen beispielsweise der Verschwenkung einer Kopfstütze oder Armlehne eines Sitzmöbels relativ zum Möbelkorpus. Der Schwenkbeschlag ist dabei mit einem ersten Hebel am Möbelkorpus festgelegt. Ein zweiter Hebel des Schwenkbeschlags ist mit der Kopfstütze oder der Armlehne verbunden. Mithilfe des Schwenkbeschlags lässt sich die Kopfstütze oder die Armlehne in verschiedenen Winkelstellungen relativ zum Möbelkorpus verstellen.

Um im Verlauf einer solchen Schwenkbewegung einen Bezugsstoff oder eine Polsterung des Möbels im Schwenkbereich zu strecken, ist es beispielsweise aus der DE 20 2007 016 435 U1, die einen gattungsgemäßen Schwenkbeschlag beschreibt, bekannt, an dem zweiten Hebel ein Befestigungsteil in Längsrichtung des zweiten Hebels verschiebbar festzulegen.

Zur Ausführung dieser Linearverschiebung werden hier Kurbelgetriebe eingesetzt. Diese Kurbelgetriebe haben den Nachteil, dass die Kurbel so platziert werden muss, dass sie über den Bauraum des Schwenkbeschlags übersteht.

Aufgrund der überstehenden Kurbel ist es notwendig, die überstehenden Kurbelenden so zu polstern, dass diese auch bei häufiger Verstellung die Polsterung nicht beschädigen und diese verstärkte Polsterung vom Nutzer des Möbels trotzdem nicht als negativ wahrgenommen wird, was den Aufwand sowie das benötigte Material zur Polsterung des Möbels erhöht.

Weiterer Nachteil der vorbekannten Lösungen ist, dass bei Belastung des verstellbaren Möbelteils und damit des Befestigungsteil entgegen der Linearverschiebungsrichtung die Kurbellaschen sowie die Laschen der der in der DE 20 2007 016 435 U1 eingesetzten Viergelenke sich unter dieser Last verbiegen, was zu einer Verklemmung des Schwenkbeschlags führen kann.

Als weiterer Nachteil der vorbekannten Lösungen ist zu nennen, dass sich die Verschiebung (Stretchweg) reduziert, wenn die Ausgangsstellung über 90° einnimmt, da die Anbindungsposition der Kurbellasche über die Lasche 1 des Schenkbeschlags vorgenommen wird. Die Länge der Verschiebung ist von der Position der Kurbellaschenanbindung und der Länge der Kurbellasche abhängig. Diese sind meist auf eine Ausgangsstellung von 90° ausgelegt. Durch eine Änderung dieser Ausgangsstellung (bspw. 130°) wird die Anfangsposition des Befestigungselements geändert, da diese bereits in Richtung L3 verschoben wurde. Damit reduziert sich die max. mögliche Verschiebung.

Aus der DE 10 2007 031 378 B3 ist ein weiterer Schwenkbeschlag bekannt, bei dem an dem zweiten Hebel ein in Längsrichtung des zweiten Hebels verschiebbar gehaltenes Befestigungsteil angeordnet ist, das über eine Getriebekette mit einer Verzahnung gekoppelt ist.

Aus der DE 31 29 606 A1 ist es bekannt, für die Ankopplung zweier Beschlagteile anstelle einer Getriebekette auch eine Kette zwischen zwei Zahnrädern einzusetzen.

Aufgabe der vorliegenden Erfindung ist es, einen Schwenkbeschlag und ein mit einem solchen Schwenkbeschlag ausgestattetes Möbel bereitzustellen, mit dem die oben genannten Nachteile beseitigt sind.

Diese Aufgabe wird durch einen Schwenkbeschlag mit den Merkmalen des Anspruchs 1 sowie durch ein Möbel mit den Merkmalen des Anspruchs 12 gelöst.

Der erfindungsgemäße Schwenkbeschlag weist einen ersten Hebel und einen zweiten Hebel auf, die um eine Schwenkachse aus einer Grundstellung heraus um einen vorbestimmten Winkel schwenkbar zueinander gelagert sind. Der Schwenkbeschlag weist des Weiteren einen Verstellmechanismus auf, mit dem die beiden Hebel in unterschiedlichen Winkelstellungen innerhalb des vorbestimmten Winkels relativ zueinander fixierbar sind.

An dem zweiten Hebel ist ein in Längsrichtung des zweiten Hebels verschiebbar gehaltenes Befestigungsteil angeordnet sowie ein mit dem Befestigungsteil gekoppelter Ketten- oder Riementrieb, oder Seilzug.

Des Weiteren weist der Schwenkbeschlag eine am ersten Hebel angeordnete und mit dem Ketten- oder Riementrieb oder Seilzug gekoppelte Antriebseinheit auf, mit der das Befestigungsteil durch Verschwenken des zweiten Hebels antreibbar ist.

Am zweiten Hebel sind eine Antriebswelle des Ketten- oder Riementriebs oder Seilzugs sowie ein zweites Zahnrad oder eine zweite Seilrolle des Ketten- oder Riementriebs oder Seilzugs angeordnet.

Das Befestigungsteil weist ein an dem beweglichen Möbelteil befestigbares Befestigungselement und ein mit einer Kette oder einem Riemen oder einem Seil des Ketten- oder Riementriebs oder Seilzugs gekoppeltes, am Befestigungselement ortsfest fixiertes Koppelelement auf. Die Kette oder der Riemen oder das Seil des Ketten- oder Riementriebs oder Seilzugs ist formschlüssig oder kraftschlüssig am Koppelelement festgelegt.

Dadurch ist eine gegenüber dem Stand der Technik größere Verschiebungslänge bei gleicher Baulänge sowie ein gegenüber einem mit einer Zahnstange geführten Befestigungselement größeres Belastungsaufnahmevermögen ermöglicht, ohne die einzelnen Bauteile zu beschädigen.
Weiterer Vorteil ist, dass die Stretchbewegung (Verschiebung) durch diesen Aufbau gleichmäßig über den gesamten Verstellbereich des Rastbeschlags durchgeführt wird.

Vorteilhafte Ausführungsvarianten der Erfindung sind Gegenstand der Unteransprüche.

Gemäß einer vorteilhaften Ausführungsvariante ist die Antriebseinheit als Überlastsicherung ausgebildet.

Durch die Ausbildung der Antriebseinheit als Überlastsicherung wird verhindert, dass die eingesetzten Komponenten des Ketten- oder Riementriebs oder Seilzugs durch zu hohe Belastungen in Verschiebungsrichtung zerstört oder beschädigt werden.

Gemäß einer vorteilhaften Ausführungsvariante weist die Antriebseinheit ein auf der Schwenkachse gelagertes Antriebsrad auf, das reibschlüssig gegen Verdrehung bis zu einem vorbestimmten Drehmoment relativ zum ersten Hebel gesichert ist.

Dies ermöglicht, das Antriebsrad relativ zum ersten Hebel bis zu einem vorbestimmten Drehmoment drehfest festzulegen, wobei bei Überschreiten dieses vorbestimmten Drehmoments durch eine von dem Ketten- oder Riementrieb oder Seilzug ausgeübte Kraft auf die Antriebseinheit das Antriebsrad drehbar ist und so eine übermäßige Belastung des Ketten- oder Riementriebs oder Seilzugs verhindert.

Das Befestigungselement selbst ist dabei bevorzugt als u-förmiger Bügel ausgebildet, so dass auch ein Verkanten des Befestigungsteils relativ zum zweiten Hebel durch die Führung des u-förmigen Bügels auf dem zweiten Hebel verhindert wird.

Gemäß einer weiteren vorteilhaften Ausführungsvariante weist das Koppelelement eine sich in Längsrichtung des zweiten Hebels erstreckende Aufnahmenut auf, in der ein Abschnitt der Kette oder des Riemens sowie Seilzugs relativ zum Koppelelement ortsfest aufgenommen ist, was die mögliche Aufnahme von Belastungskräften weiter vergrößert.

Gemäß einer weiteren Ausführungsvariante der Erfindung weist eine von dem Antriebsrad angetriebene Antriebswelle des Ketten- oder Riementriebs oder Seilzugs ein Zahnrad und ein Ritzel auf, wobei das Ritzel mit dem Antriebsrad kämmt.

Dies ermöglicht gegenüber einem direkten Antrieb über das Antriebsrad einen verlängerten Linearverschiebungsweg des Befestigungsteils bei gleichbleibendem Durchmesser des Antriebsrades.

Die Antriebseinheit selbst weist gemäß einer bevorzugten Ausführungsvariante ein das Antriebsrad tragendes Trägerelement, eine auf dem Antriebsrad aufliegende Reibscheibe, ein Einstellelement und einen Schraubbolzen auf, der durch Bohrungen des Antriebsrades, der Reibscheibe und der Hebel durchgeführt ist.

Mithilfe des bevorzugt als selbstsichernde Mutter ausgeführten Einstellelements kann das gewünschte maximale Drehmoment eingestellt werden, dem das Antriebsrad bei Belastung des Befestigungsteils ohne Verstellung des zweiten Hebels relativ zum ersten Hebel standhält.

Das Trägerelement weist gemäß einer weiteren Ausführungsvariante der Erfindung einen Auflagekorpus zur Auflage des Antriebsrades und einen sich von dem Auflagekorpus radial erstreckenden, am ersten Hebel befestigten Arm auf.

Durch den Arm des Trägerelements ist eine Drehsicherung des Trägerelements relativ zum ersten Hebel gewährleistet.

Nach einer weiteren bevorzugten Ausführungsvariante ist am zweiten Hebel wenigstens ein eine Ausgangsstellung des Befestigungsteils definierender Anschlag angeordnet, insbesondere angeformt.

Dieser Anschlag ermöglicht auch eine synchronisierte Rückstellung des Befestigungsteils nach Verstellung des Befestigungsteils durch Überlastung zurück in eine vordefinierte Ausgangsstellung.

Bei der Auslösung der Überlastsicherung werden von diesem Anschlag die Kräfte aufgenommen, so dass die Antriebselemente keine Kräfte mehr übertragen oder aufnehmen müssen.

Neben der manuellen Betätigung des Schwenkbeschlages ist es gemäß einer weiteren Ausführungsvariante der Erfindung auch möglich, den Schwenkbeschlag mit einem elektromotorischen Antrieb zu versehen. Denkbar ist es auch, den Schwenkbeschlag gemäß einer weiteren Ausführungsvariante mit einem am Hebelkopf des ersten Hebels angeordneten Federelement zu versehen.

Optional kann der Schwenkbeschlag auch bevorzugt am zweiten Hebel eine Abdeckung aufweisen, welche den Ketten- oder Riementrieb oder Seilzug und/oder das Antriebsrad abdeckt, so dass die benachbarte Polsterung oder Bezugsstoffe einerseits nicht beschädigt werden, und andererseits kein Fremdkörper in den Ketten- oder Riementrieb oder Seilzug und/oder das Antriebsrad eingreifen kann.

Ein weiterer Vorteil des erfindungsgemäßen Schwenkbeschlags besteht darin, dass die Länge der Verschiebung des Stretchbeschlags nur abhängig vom Verschwenkwinkel des Rastbeschlags ist. Bleibt der Verschenkwinkel gleich, kann die Ausgangsstellung des Schwenkbeschlags jede beliebige Winkelstellung einnehmen.

Durch die Überlastsicherung und die damit gewährleistende Synchronisierung durch die Anschläge kann bei jeder gewünschten Ausgangsstellung das Befestigungsteils in der Ausgangsstellung synchronisiert und somit die volle Verschiebung (Stretchung) umgesetzt werden.

Nach einer weiteren bevorzugten Ausführungsvariante weist die Antriebseinheit eine drehfest mit dem ersten Hebel gekoppelte Kettenradscheibe und ein über eine Kette mit der Kettenradscheibe gekoppeltes Seilzahnrad auf, wobei das Seilzahnrad über einen Seilzug mit einem Seilrad verbunden ist.

Auch bei dieser Variante ist eine gegenüber dem Stand der Technik vergrößerte Verschiebungslänge bei gleicher Baulänge ermöglicht.

Das erfindungsgemäße Möbel zeichnet sich durch einen wie oben beschriebenen Schwenkbeschlag aus.

Nachfolgend werden bevorzugte Ausführungsvarianten der Erfindung anhand der beiliegenden Zeichnungen näher erläutert. Es zeigen:
- Figur 1: eine perspektivische Ansicht einer Ausführungsvariante eines erfindungsgemäßen Schwenkbeschlages mit dem Ketten- oder Riementrieb abdeckenden Gehäuse,
- Figur 2: eine perspektivische Ansicht des Schwenkbeschlages gemäß Figur 1 ohne den Ketten- oder Riementrieb abdeckendes Gehäuse,
- Figuren 3: eine perspektivische Explosionsdarstellung des Schwenkbeschlags aus Figur 1,
- Figur 4: eine Vorderansicht auf den Schwenkbeschlag aus Figur 2 in einer Ausgangsstellung,
- Figur 5: eine perspektivische Ansicht des Schwenkbeschlags aus Figur 2 in einer Winkelstellung mit maximal ausgefahrenem Befestigungsteil,
- Figur 6: eine perspektivische Ansicht des Schwenkbeschlags gemäß Figur 5 mit durch Überbelastung zurückgeschobenem Befestigungsteil,
- Figur 7: eine perspektivische Ansicht des Schwenkbeschlags gemäß Figur 5 mit durch Überbelastung maximal zurückgeschobenem Befestigungsteil,
- Figur 8: eine perspektivische Ansicht des Schwenkbeschlags gemäß Figur 5 mit durch Überbelastung zurückgeschobenem Befestigungsteil bei in Richtung der Ausgangsstellung zurückverschwenktem ersten Hebel,
- Figur 9: eine perspektivische Ansicht des Rastbeschlags mit zurück in die Ausgangsstellung gebrachtem ersten Hebel nach durch Überbelastung in die Ausgangsstellung verschobenem Befestigungsteil,
- Figuren 10 bis 12: unterschiedliche Ansichten einer ersten Ausführungsvariante einer Antriebseinheit,
- Figuren 13 bis 15: den Figuren 10 bis 12 entsprechende Darstellung einer zweiten Ausführungsvariante einer Antriebseinheit,
- Figur 16: neue perspektivische Darstellung eines Schwenkbeschlags mit elektromotorischem Antrieb,
- Figur 17: eine perspektivische Explosionsdarstellung einer nochmals alternativen Ausführungsvariante eines Schwenkbeschlags,
- Figur 18: eine Vorderansicht auf den Schwenkbeschlag aus Figur 17 in einer Ausgangsstellung,
- Figur 19: eine Vorderansicht des Schwenkbeschlags aus Figur 17 in einer Winkelstellung mit maximal ausgefahrenem Befestigungsteil,
- Figuren 20 und 21: unterschiedliche Ansichten der Seileinhängung im Befestigungsteil des Schwenkbeschlags aus Figur 17,
- Figuren 22 bis 24: perspektivische Darstellungen eines Polstermöbels mit Armlehne in unterschiedlichen Rastpositionen.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Schwenkbeschlages, des Hebels, des Befestigungsteils, der Kette, der Antriebseinheit und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

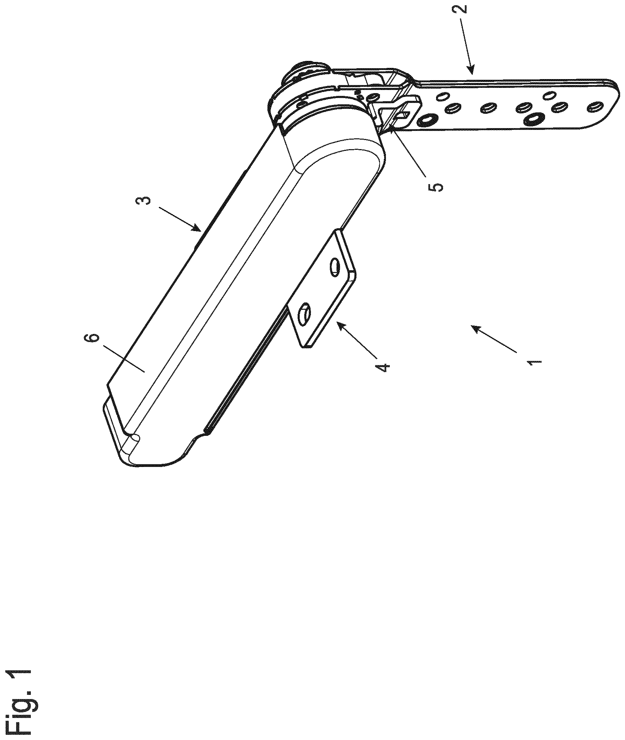

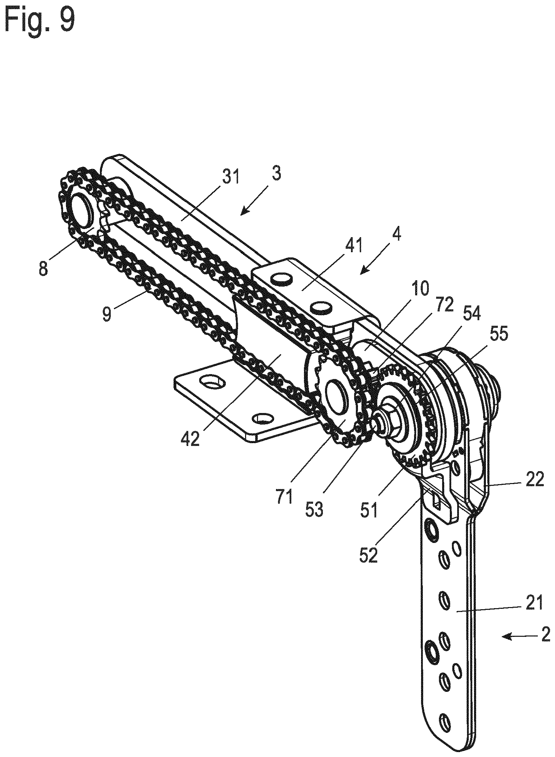

In den Figuren 1 bis 9 ist mit dem Bezugszeichen 1 insgesamt eine Ausführungsvariante eines erfindungsgemäßen Schwenkbeschlages bezeichnet. Der Schwenkbeschlag 1 weist, wie in den Figuren 1 bis 3 gezeigt, einen ersten Hebel 2 und einen zweiten Hebel 3 auf, die um eine gemeinsame Schwenkachse D aus einer Grundstellung heraus um einen vorbestimmten Winkel α schwenkbar zueinander gelagert sind. Zwischen einem ersten Deckel 2a und einem zweiten Deckel 2b des hier aus zwei Hebelteilen bestehenden ersten Hebels 2 ist ein Verstellmechanismus 24 angeordnet, mit dem die beiden Hebel 2, 3 in unterschiedlichen Winkelstellungen innerhalb des vorbestimmten Winkels α relativ zueinander fixierbar sind.

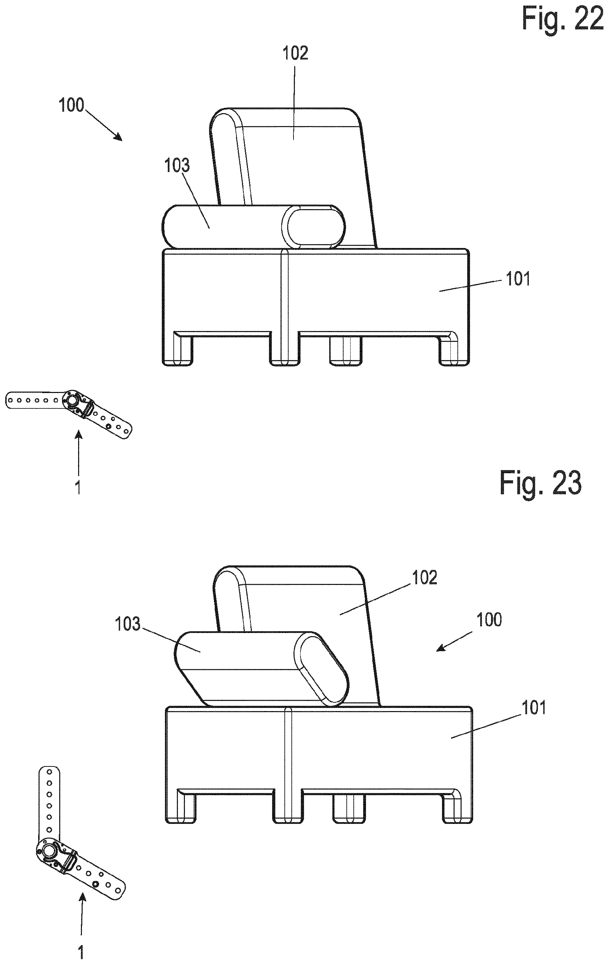

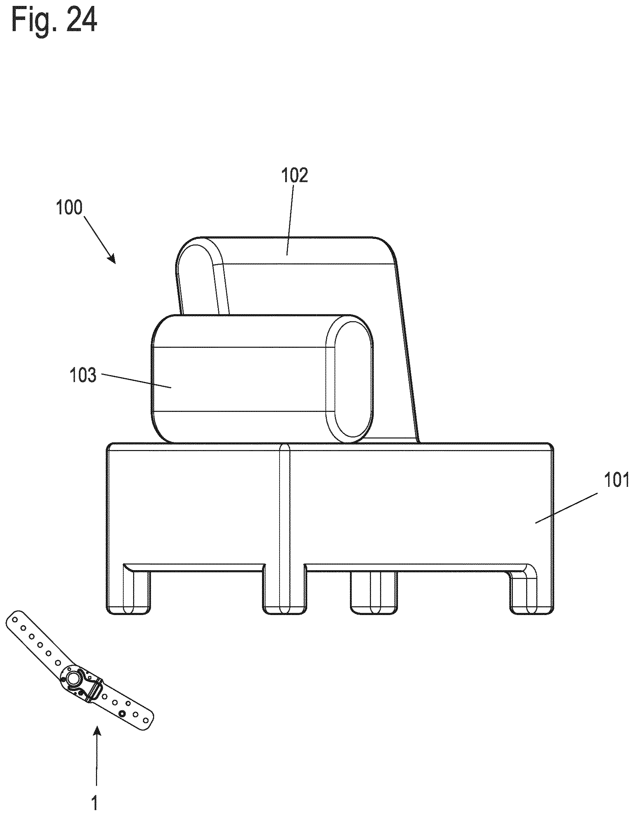

Wie in den Figuren 22 bis 24 gezeigt, wird der erste Hebel 2 bevorzugt an einem Möbelkorpus 101 eines Möbels wie beispielsweise eines Sitz- oder Liegemöbels befestigt. Der zweite Hebel 3 wird entsprechend an einem relativ zum Möbelkorpus 101 beweglichen Möbelteil, wie beispielsweise einer Armlehne 102 oder einer Kopfstütze des Möbels 100 befestigt.

Zur Befestigung des beweglichen Möbelteils am zweiten Hebel 3 ist an dem zweiten Hebel 3 ein in Längsrichtung L₃ des zweiten Hebels 3 verschiebbar gehaltenes Befestigungsteil 4 angeordnet, um eine Straffung eines Bezugsstoffes oder einer Polsterung des beweglichen Möbelteils auch bei Verstellung des beweglichen Möbelteils zu gewährleisten.

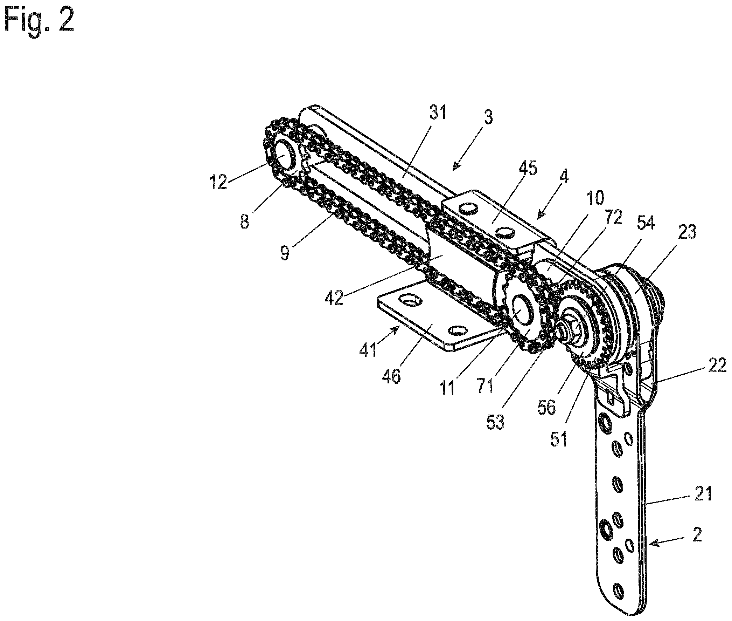

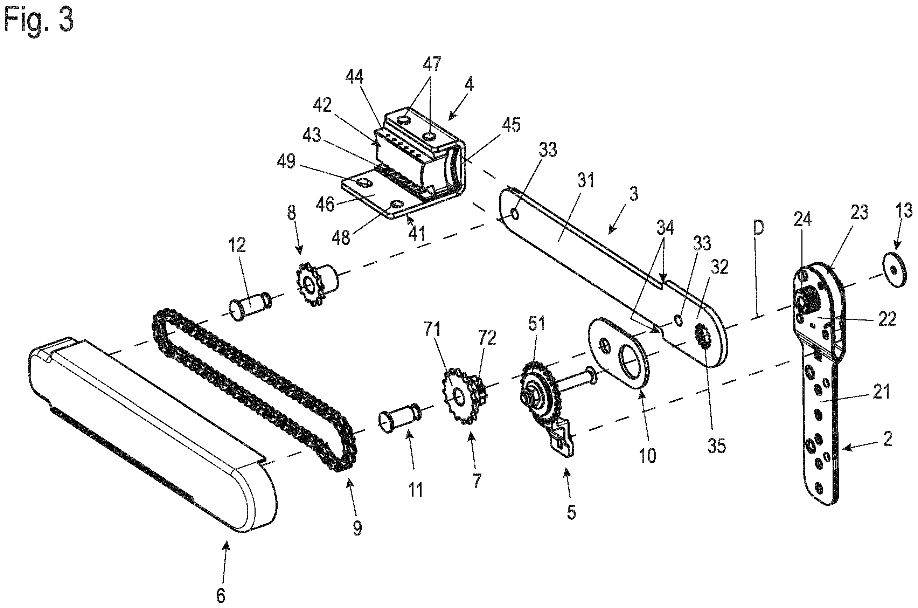

Zur Verstellbewegung dieses Befestigungsteils 4 dient dabei, wie in den Figuren 2 und 3 dargestellt, ein Kettentrieb. Denkbar ist beispielsweise auch ein Riementrieb oder ein Seilzug.

Der Kettentrieb besteht dabei im Wesentlichen aus einer Kette 9, die auf einem ersten Zahnrad 71 und einem zweiten Zahnrad 8 geführt ist. Die beiden Zahnräder 71, 8 sind über jeweilige Bolzen oder Nieten 11 und 12 am zweiten Hebel 3 in dazu vorgesehenen Bohrungen 33 drehbar gehalten.

Der Antrieb dieses Kettentriebs erfolgt über eine Antriebseinheit 5, die bevorzugt als Überlastsicherung ausgebildet ist.

Diese Antriebseinheit 5 weist, wie in den Figuren 2 und 3 gezeigt ist, ein auf der Schwenkachse D gelagertes Antriebsrad 51 auf, das reibschlüssig gegen Verdrehung bis zu einem vorbestimmten Drehmoment M_{Max} relativ zum ersten Hebel 2 gesichert ist.

Wie des Weiteren in Figur 2 und 3 gezeigt ist, kämmt das Antriebsrad 51 der Antriebseinheit 5 mit einem Ritzel 72, das als Teil einer als Getriebestufe ausgebildeten Antriebswelle 7 koaxial zu dem Zahnrad 71, auf dem die Kette 9 gelagert ist, angeordnet ist. Die dadurch bewirkte Übersetzung ermöglicht die Aufnahme großer Lasten auf das Befestigungsteil 4 ohne Beschädigung der Zahnräder oder anderer Bauteile des Schwenkbeschlags 1. Des Weiteren bestimmt das Übersetzungsverhältnis den Weg der Längsverschiebung des Befestigungsteils 4 in Abhängigkeit zur Winkelverstellung zwischen dem ersten Hebel 2 und dem zweiten Hebel 3, solange kein Durchrutschen eintritt.

Das Befestigungsteil 4 besteht im Wesentlichen aus einem an dem beweglichen Möbelteil befestigbaren Befestigungselement 41 und einem mit der Kette 9 oder einem Riemen oder einem Seil des Ketten- oder Riementriebs oder Seilzugs gekoppeltes, am Befestigungselement 41 ortsfest fixiertes Koppelelement 42.

Das Befestigungselement 41 ist vorzugsweise als u-förmig gebogener Bügel ausgebildet, der den zweiten Hebel von drei Seiten umfasst.

Das Koppelelement 42 weist eine sich in Längsrichtung L₃ des zweiten Hebels 3 erstreckende Aufnahmenut 43 auf, in der ein Abschnitt der Kette 9 relativ zum Koppelelement ortsfest aufgenommen ist.

Dabei ist eine Innenwandung der Aufnahmenut 43 bevorzugt mit Rastnasen oder einer Wellenform oder dergleichen ausgebildet, um einen Formschluss mit der Kette 9 oder dem Riemen zu bewirken.

Der Formschluss kann auch in anderer Weise hergestellt werden, beispielsweise durch die Verwendung von Stiften, welche in die quer zur Aufnahmenut 43 laufenden Bohrungen im Koppelelement 42 durch die Glieder der Kette 9 oder Schlaufen des Seils im Fall eines Seilzugs gesteckt werden und diese sichern.

Das Koppelelement 42 weist des Weiteren eine zu der Aufnahmenut 43 parallele Auflagefläche 44 auf, auf der die Kette 9 oder der Riemen oder das Seil aufliegt und bei Verschiebung des Befestigungsteils 4 relativ zum zweiten Hebel 3 gleitet.

Das Koppelelement 42 ist im Bereich des u-förmigen Abschnitts des Befestigungselements 41 befestigt, beispielsweise über Bolzen 47, die durch einen oder beide Schenkel des u-förmig geformten Befestigungselements 41 in das Koppelelement 42 versenkt sind.

Alternativ könnten auch Formelemente am Koppelelement 42 angebracht sein, welche sich in den Bohrungen des Befestigungselements 41 hinterrasten und somit einen Formschluss bilden.

Alternativ zur Festlegung der Kette 9 oder des Riemen oder des Seils mittels Formschluß am Befestigungsteil 4 ist auch eine Fixierung mittels Kraftschluß möglich, beispielsweise durch die klemmende Festlegung der Kette 9 oder des Riemen oder des Seils mittels mindestens einer Andrückschraube, eines Keils, oder ähnlichen Elementen.

Zwischen dem Koppelelement 42 und einer zur Fläche eines Hebelarms 31 des zweiten Hebels 3 parallelen Grundschenkel 45 des u-förmigen Befestigungselements 41 verbleibt eine Lücke, in der der Hebelarm 31 des zweiten Hebels 3 in Längsrichtung L₃ des zweiten Hebels 3 verschiebbar aufgenommen ist.

Wie in Figur 3 des Weiteren gezeigt ist, bildet der Übergang zwischen dem Hebelarm 31 und einem Hebelkopf 32 des zweiten Hebels 3 einen Anschlag 34, an dem Stirnkanten des Befestigungselements 41 anliegen, wenn das Befestigungsteil 4 in einer Ausgangsposition des Schwenkbeschlags 1 positioniert ist.

Gemäß Figur 1 und 3 kann der Schwenkbeschlag 1 bevorzugt am zweiten Hebel 3 eine Abdeckung 6 aufweisen, welche den Ketten- oder Riementrieb oder Seilzug und/oder das Antriebsrad 51 abdeckt, so dass die benachbarte Polsterung oder Bezugsstoffe einerseits nicht beschädigt werden, und andererseits kein Fremdkörper in den Ketten- oder Riementrieb oder Seilzug und/oder das Antriebsrad 51 eingreifen kann. Die Abdeckung 6 ist hierbei mittels geeigneten Befestigungsmitteln lösbar oder unlösbar mit dem zweiten Hebel 3 verbunden und weist eine längliche Ausnehmung auf, durch welche der Befestigungsschenkel 46 des Befestigungsteils 4 die Abdeckung 6 durchtritt.
Am Befestigungsschenkel 46 wird das bewegliche Möbelteil befestigt.

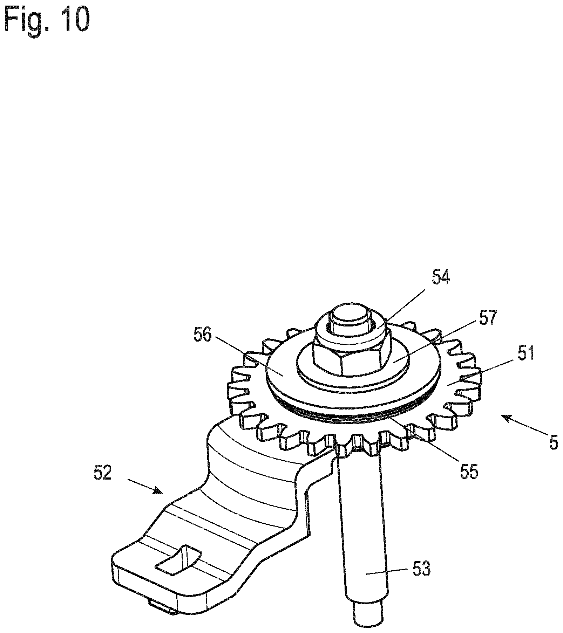

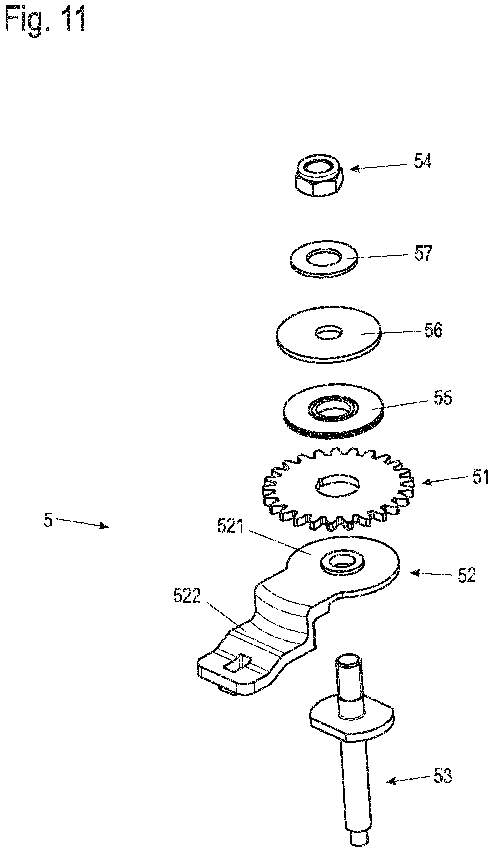

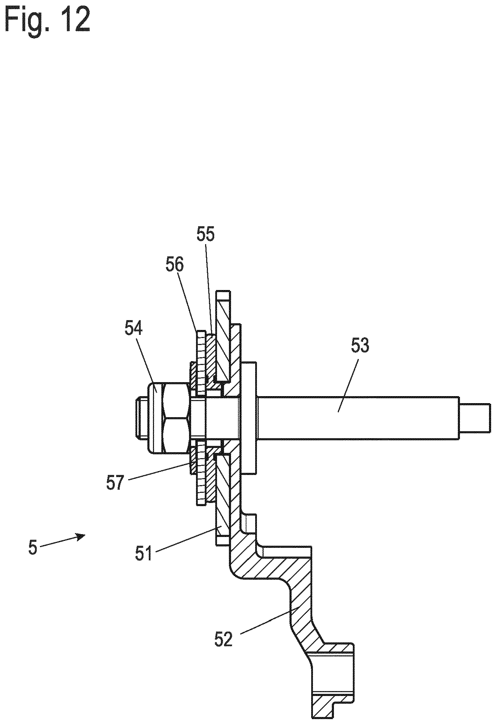

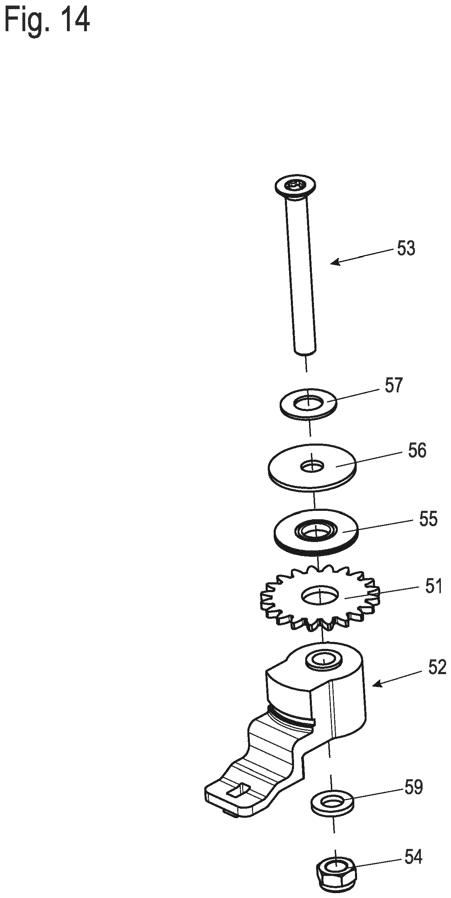

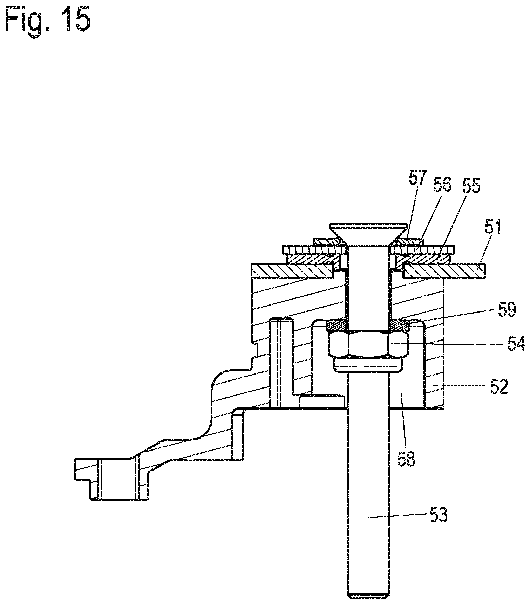

In den Figuren 10 bis 15 sind zwei mögliche Varianten der Antriebseinheit 5 dargestellt.

Die Antriebseinheit 5 weist in beiden Ausführungsvarianten ein das Antriebsrad 51 tragendes Trägerelement 52 auf, eine auf dem Antriebsrad 51 aufliegende Reibscheibe 55, ein hier als selbstsichernde Mutter ausgebildetes Einstellelement 54 und einen Schraubbolzen 53, auf dessen Gewinde das Einstellelement 54 aufschraubbar ist. Die Reibscheibe 55 wird dabei mittels einer Anpreßscheibe 56 und einer Scheibe 57 axial an das Antriebsrad 51 angedrückt, wobei die Anpreßscheibe 56 auch als Tellerfeder ausgebildet sein kann. Auch andere Druckfedern sind denkbar. Der Schraubbolzen 53 ist dabei durch Bohrungen des Antriebsrades 51, der Reibscheibe 55 und der Hebel 2, 3 durchgeführt und sichert so die genannten Bauteile des Schwenkbeschlags 1 in axialer Richtung zur Schwenkachse D der Hebel 2, 3.

Das Einstellelement 54 und der Schraubbolzen 53 dienen in ihrer Zusammenwirkung als Einstellmittel zur Einstellung des Anpreßdrucks der Reibscheibe 55 an das Antriebsrad 51

Mithilfe des Einstellelements 54 ist es somit ermöglicht, das vorbestimmte Drehmoment M_{Max} einzustellen. Dieses Drehmoment M_{Max} ist dabei so definiert, dass das Antriebsrad 51 bis zu diesem Drehmoment M_{Max} nicht verdreht werden kann, jedoch bei Überschreiten einer über den Ketten- oder Riementrieb oder Seilzug auf das Antriebsrad 51 übertragenden Drehmoment M das Antriebsrad 51 auf der Schwenkachse D dreht und so einer Beschädigung des Ketten- oder Riementriebs oder anderer Bauteile des Schwenkbeschlags 1 oder des Möbels entgegenwirkt.

Beim Überschreiten des Drehmoments M_{Max} verdreht sich also das Zahnrad 51 gegenüber der Reibscheibe 55 und dem Auflagekorpus 521 des Trägerelements 52, es kommt zum "Durchrutschen".

Zur verdrehgesicherten Halterung der Antriebseinheit 5 weist das Trägerelement 52 bevorzugt einen Auflagekorpus 521 zur Auflage des Antriebsrads 51 und einen sich von dem Auflagekorpus 521 radial erstreckenden, am ersten Hebel 2 befestigten Arm 522 auf, der das Trägerelement 52 gegen eine Rotationsbewegung sichert.

Bei der in den Figuren 2, 3 und 10 bis 12 gezeigten Ausführungsvariante der Antriebseinheit 5 ist das Einstellelement 54 auf der dem ersten Hebel 2 abgewandten Seite des zweiten Hebels 3 angeordnet und so von dieser Seite her einstellbar.

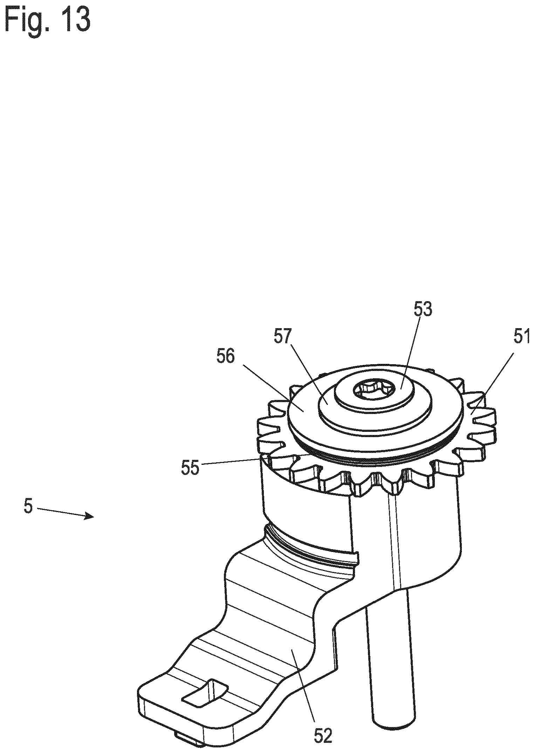

Sofern eine Einstellbarkeit des Einstellelements 54 von der dem zweiten Hebel 3 zugewandten Seite des Trägerelements 52 erfolgen soll oder anstelle einer Einstellmutter eine Einstellschraube zum Einsatz kommen soll, kann das Trägerelement 52, wie in den Figuren 13 bis 15 dargestellt, so ausgebildet sein, dass auf der dem zweiten Hebel 3 zugewandten Seite des Trägerelements 52 ein Hohlraum angeformt ist, in dem die Mutter im fertig montierten Zustand der Antriebseinheit 5 versenkt ist und entsprechend ein Schraubkopf von der dem zweiten Hebel 3 abgewandten Seite des Trägerelements 52 zugänglich ist.

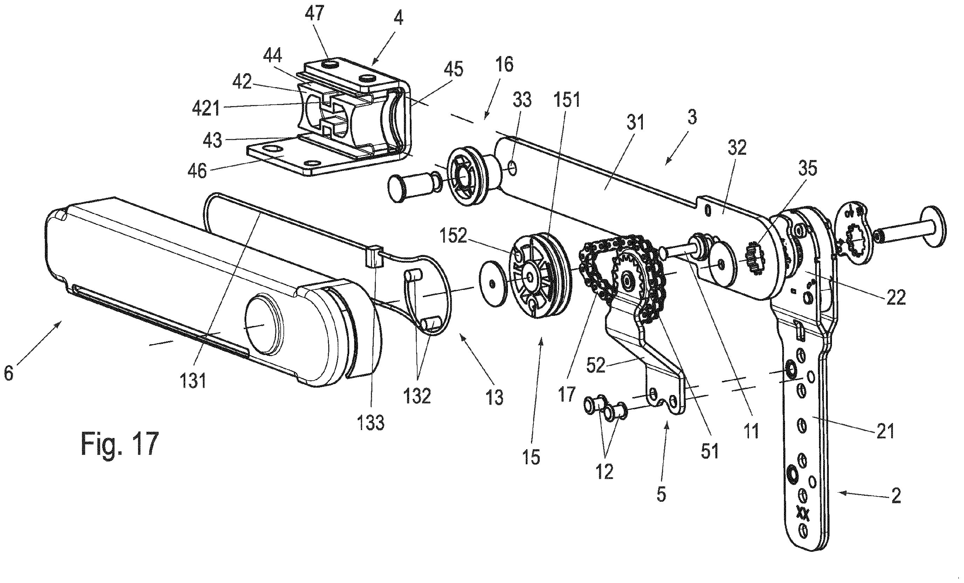

Sofern die Funktion der Überlastsicherung nicht benötigt wird, ist es auch denkbar, das Antriebsrad 51 drehfest am Trägerelement 52 anzuordnen, wie es beispielsweise in Figur 17 dargestellt ist.

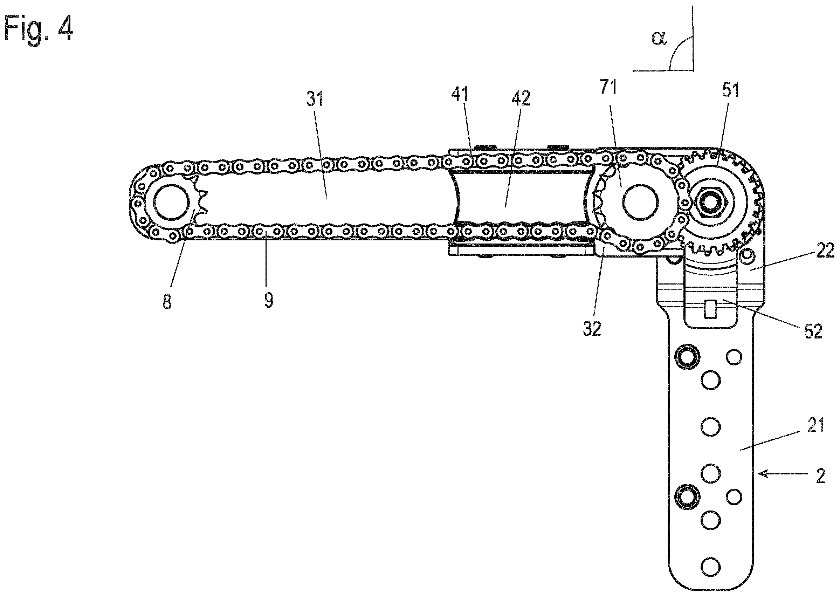

Anhand der Figuren 4 bis 9 wird im Folgenden der Bewegungsablauf des Schwenkbeschlags 1 im Normalbetrieb und bei Überbelastung des Befestigungsteils 4 erläutert.

Figur 4 zeigt eine Ausgangsstellung des Schwenkbeschlags 1. In dieser Ausgangsstellung liegt das Befestigungsteil 4 mit der dem ersten Hebel 2 zugewandten Stirnseite 45 an den Anschlägen 34 des zweiten Hebels 3 an. Bei Verschwenkung des zweiten Hebels 3 im Uhrzeigersinn erfolgt gleichzeitig mit der Verschwenkung des zweiten Hebels 3 relativ zum ersten Hebel 2 eine Verschiebung des Befestigungsteils 4 hin zum freien Ende des zweiten Hebels 3.

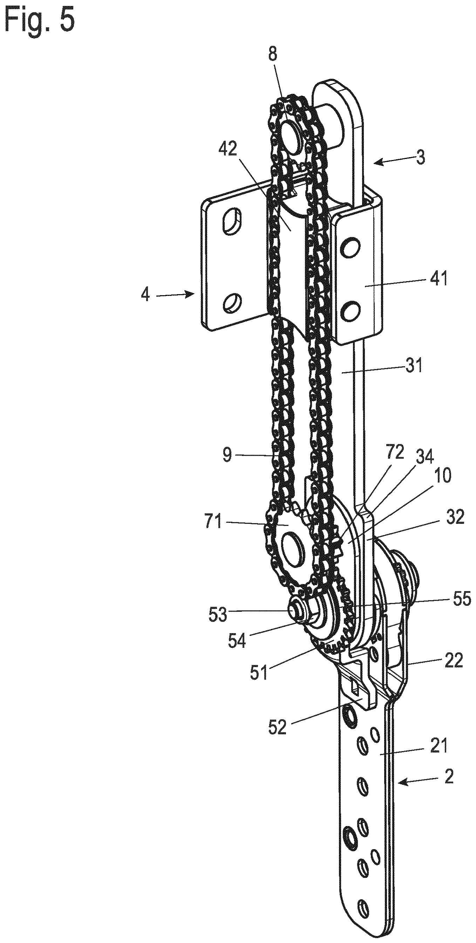

Erfolgt nun eine übermäßige Belastung des Befestigungsteils 4, rutscht das Befestigungsteil 4 von der in Figur 5 dargestellten Position zurück in Richtung der Ausgangsstellung.

Dies wird ermöglicht durch die als Überlastsicherung ausgebildete Antriebseinheit 5, bei der das Antriebsrad 51 durch den Kettentrieb verdreht wird, ohne dass eine gleichzeitige Verschwenkung des zweiten Hebels 3 relativ zum ersten Hebel 2 erfolgt.

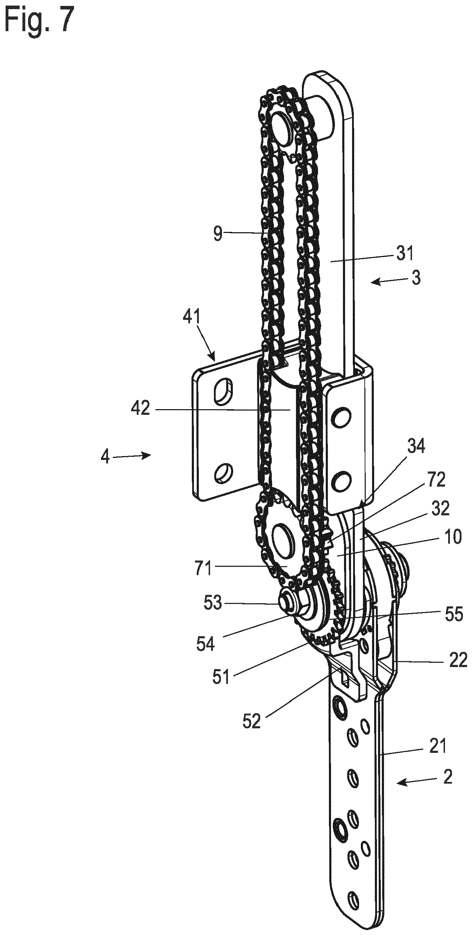

Figur 7 zeigt schließlich eine Situation, bei der das Befestigungsteil 4 in die Ausgangsstellung durchgerutscht ist.

Um den Schwenkbeschlag 1 zurück in eine definierte Ausgangsstellung zu verfahren, muss bei der Reversierung des Schwenkbeschlags 1 auch der zweite Hebel 3 zurück in seine Ausgangsstellung gefahren werden.

Da bei der in Figur 7 gezeigten durchgerutschten Stellung des Befestigungsteils 4 dieses bereits am Anschlag 34 des zweiten Hebels 3 anliegt, bleibt bei der Verschwenkung des zweiten Hebels 3 zurück in seine Ausgangsstellung, bei der das Ritzel 72 nach wie vor in eine Richtung mit dem Antriebsrad 51 der Antriebseinheit 5 kämmt, das Befestigungsteil 4 in der Grundstellung, anliegend am Anschlag 34. Auch hier wird durch die als Überlastsicherung ausgelegte Antriebseinheit 5 das maximale Drehmoment M_{Max} überschritten, so dass sich das Antriebsrad 51 beim Zurückstellen erneut zu drehen beginnt und so eine Schwenkbewegung des zweiten Hebels 3 zurück in die Ausgangsstellung, wie es in Figur 4 gezeigt ist, ermöglicht.

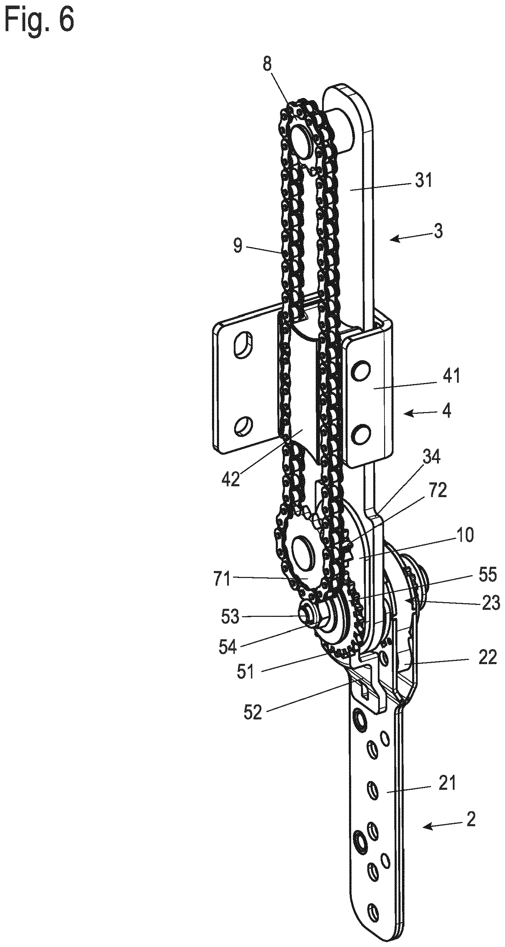

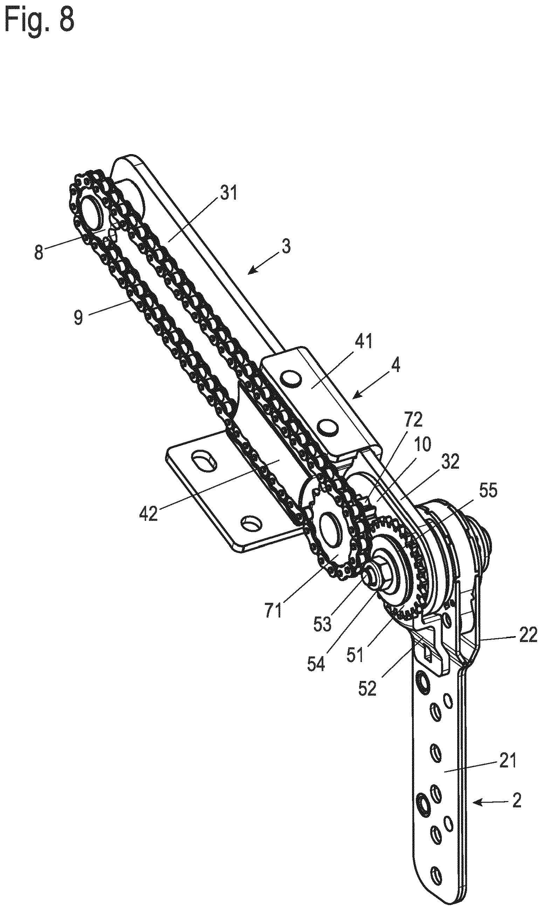

Befindet sich das Befestigungsteil 4 vor dem Zurückstellen in die Ausgangsstellung in einer teilweise ausgefahrenen Position gemäß Figur 6, so wird bei der Reversierung des Schwenkbeschlags 1 zunächst das Befestigungsteil 4 gegen den Anschlag 34 des zweiten Hebels 3 gefahren, wie in Figur 8 ersichtlich. Verbleibt dann ein noch zu überwindender Restwinkel, erfolgt die weitere Rückstellung durch Überwinden des maximalen Drehmoments, bei dem sich das Antriebsrad 51 der Antriebseinheit 5 mitdreht.

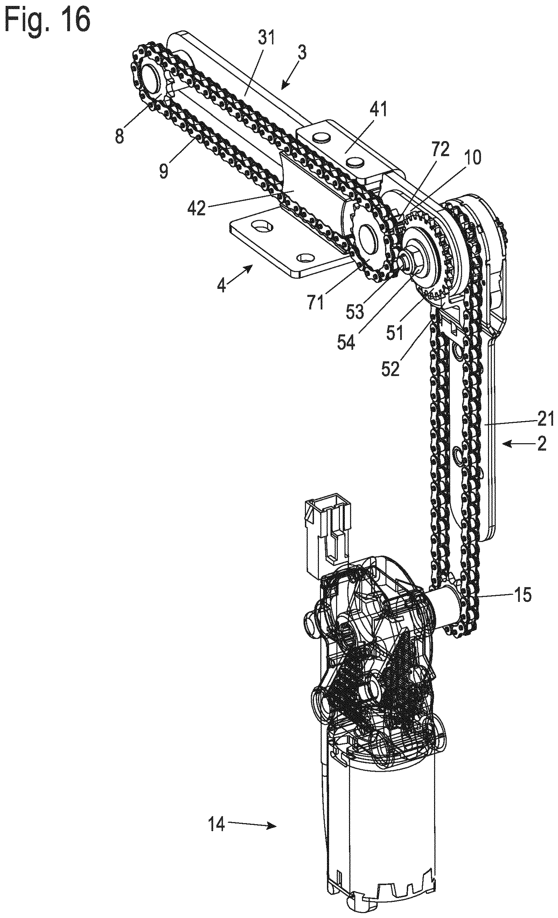

In Figur 16 ist eine weitere Ausführungsvariante eines erfindungsgemäßen Schwenkbeschlags 1 gezeigt, bei der zusätzliche Bauteile am Schwenkbeschlag 1 angeordnet sind.

So zeigt die Figur 16 eine Ausführungsvariante eines Schwenkbeschlags 1, bei dem anstelle einer manuellen Schwenkbewegung die Schwenkbewegung des zweiten Hebels 3 motorisch erfolgt. Dazu ist ein elektromotorischer Antrieb 14 über einen Kettentrieb mit einer Kraftwelle 25, die fest mit dem zweiten Hebel 3 verbunden ist, gekoppelt.

Da der Verstellmechanismus 24 zur Winkelverstellung zwischen dem ersten Hebel 2 und dem zweiten Hebel 3 bei dieser Ausführung aus der Anordnung des elektromotorischer Antriebs 14 mit dem Kettentrieb und der Kraftwelle besteht, kann der Schwenkbeschlag 1 hierbei als einfache Gelenkverbindung zwischen Hebel 2 und Hebel 3 ausgebildet sein.

Demgegenüber kommen bei manuell verstellbaren Ausführungen Verstellmechanismen 24 zur Anwendung, die aus dem Stand der Technik bekannt sind, und bei denen beispielsweise dem zweiten Hebel 3 eine Verzahnung zugeordnet ist, in die eine Sperrklinke, die am ersten Hebel 2 gelagert ist, eingreift, so dass verschiedene Winkelstellungen zwischen den Hebeln 2 und 3 ermöglicht werden. Auch stufenlose mechanische Verstellmechanismen, die beispielsweise auf dem Grundprinzip der Klemmung beruhen, sind einsetzbar.

Bei den beschriebenen Ausführungen erfolgt die Fixierung des ersten Hebels 2 am Möbelkorpus 101 eines Möbels und des Befestigungsteils 4 des zweiten Hebels 3 an einem relativ zum Möbelkorpus 101 beweglichen Möbelteils, wie beispielsweise einer Armlehne 102 oder einer Kopfstütze.

Bei der Betätigung des Schwenkbeschlages 1 verbleibt die Drehachse D des Schwenkbeschlages 1 hierbei an seiner festen Position in Relation zum Möbelkorpus 101, während sich das bewegliche Möbelteil durch die Längenänderung von der Drehachse D entfernt.

Die Anbringung kann aber auch umgekehrt erfolgen.

In diesem Fall erfolgt die Fixierung des Befestigungsteils 4 des zweiten Hebels 3 am Möbelkorpus 101 eines Möbels und des ersten Hebels 2 an einem relativ zum Möbelkorpus 101 beweglichen Möbelteils. Bei der Betätigung des Schwenkbeschlages 1 verändert sich die Position der Drehachse D des Schwenkbeschlages 1 in Relation zum Möbelkorpus 101 durch die Längenänderung, während sich das bewegliche Möbelteil nicht von der Drehachse D entfernt.

Eine weitere alternative Ausführungsvariante wird im Folgenden anhand der Figuren 17 bis 21 beschrieben.

Bei dieser Ausführungsvariante weist die Antriebseinheit 5 ebenfalls ein Antriebsrad 51 auf, das an einem Trägerelement 52 getragen wird.

Die Antriebseinheit 5 kann auch hier, wie bei der Beschreibung der vorangegangenen Ausführungsvarianten ausgeführt, als Überlastsicherung ausgebildet sein. Bei der hier gezeigten Ausführungsvariante ist die Antriebseinheit 5 ohne eine solche Überlastsicherung ausgebildet. Das Antriebsrad 51 ist hier drehfest zum ersten Hebel 2 am Trägerelement 52 befestigt.

Wie in den Figuren 17 bis 19 gezeigt ist, ist das Antriebsrad 51 über eine Kette 17, insbesondere eine Rollenkette mit dem (nicht dargestellten) Zahnrad eines Seilzahnrads 15 fest verbunden. Das Seilzahnrad 15 ist analog zu den oben genannten Ausführungsvarianten über einen Niet 11 am zweiten Hebel 3 drehbar festgelegt. Das (nicht dargestellte) Zahnrad des Seilzahnrads 15 kann einen anderen, insbesondere kleineren Teilkreisdurchmesser aufweisen als das Antriebsrad 51, wodurch ein Übersetzungsverhältnis entsteht, so dass sich das Verhältnis der Verschiebung des beweglichen Möbelteils in Verhältnis zur Winkelverstellung wie gewünscht vordefinieren lässt.

Bei Verschwenkung des zweiten Hebels 3 relativ zum ersten Hebel 2 bewegt sich das Seilzahnrad 15 mit dem zweiten Hebel 3 relativ zum Antriebsrad 51.

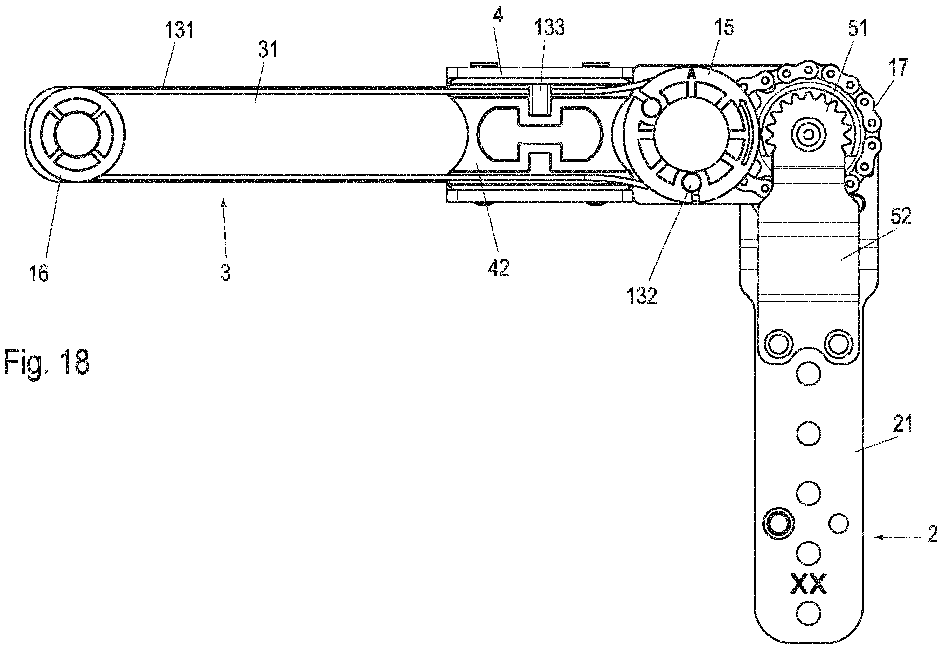

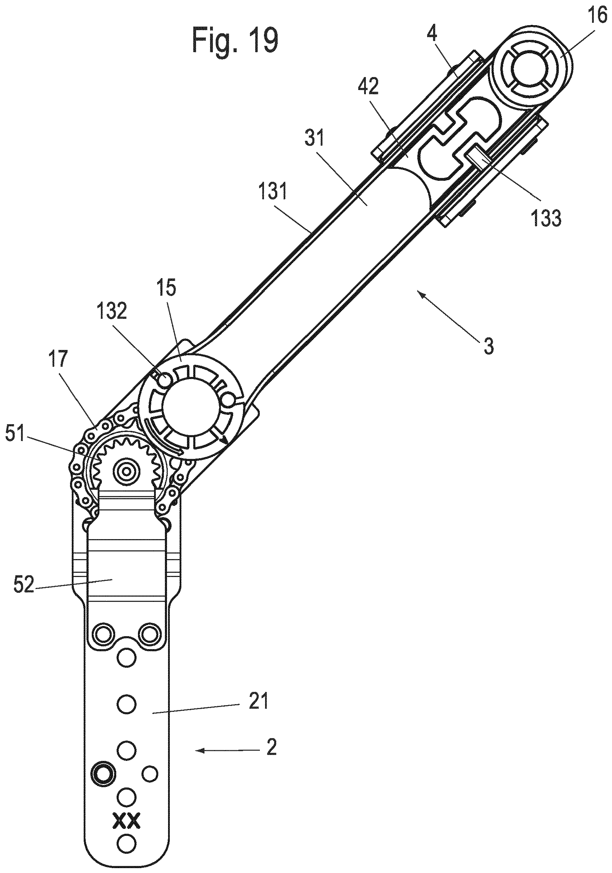

Wie in den Figuren 18 und 19 gezeigt, wird durch die Kopplung des Seilzahnrads 15 mit dem Antriebsrad 51 über die Kette 17 das Seilzahnrad 15 gegen den Uhrzeigersinn gedreht bei Verschwenkung des zweiten Hebels 3 relativ zum ersten Hebel 2 im Uhrzeigersinn.

Alternativ zur Kette 17 ist es auch möglich, einen Riemen, insbesondere einen Zahnriemen zu verwenden, wobei das Antriebsrad 51 und das (nicht dargestellte) Zahnrad des Seilzahnrads 15 dann entsprechend zur Aufnahme des Riemens oder Zahnriemens ausgestaltet sind.

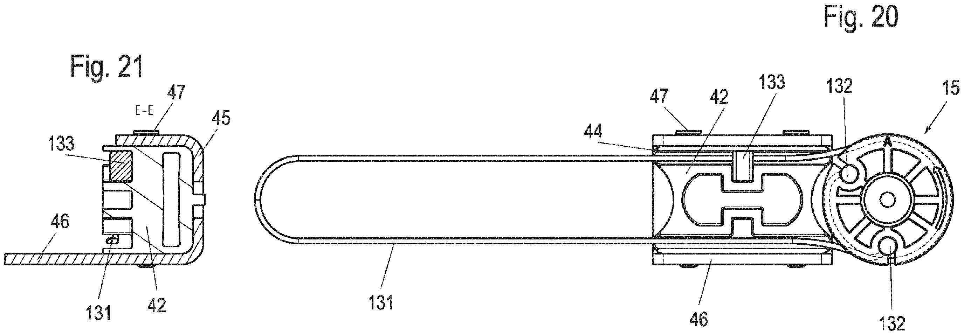

Das Seilzahnrad 15 weist eine umfängliche Seilnut 151 zur Aufnahme eines Seils 131 eines Seilzugs 13 auf, über den das Seilzahnrad 15 mit dem Befestigungsteil 4 gekoppelt ist, wie in den Figuren 20 und 21 dargestellt ist.

Auf der dem Seilzahnrad 15 abgewandten Seite des Befestigungsteils 4 ist das Seil 131 auf einem Seilrad 16 geführt, das über einen Bolzen 12 am freien Ende des zweiten Hebels 3 drehbar gelagert ist.

An dem Seil 131 ist ein Mitnehmer 133 fixiert, insbesondere aufgespritzt, der in einer entsprechenden Mitnehmernut 421 am Koppelelement 42 des Befestigungsteils 4 aufgenommen ist.

Dadurch wird das Befestigungsteil entlang des zweiten Hebels 3 durch Bewegung des Seils 131 und insbesondere des an diesem fixierten Mitnehmers 133 entlang der Längsachse des zweiten Hebels 3 verschoben.

Der prinzipielle Aufbau des Befestigungsteils 4 entspricht dabei dem des anhand der Figuren 1 bis 16 beschriebenen Befestigungsteils 4. Der Seilzug 13 weist des Weiteren, wie in Figur 17 gezeigt, an seinen Seilzugenden 132 Verdickungen, vorzugsweise in zylindrischer Gestalt auf, die in entsprechende Fixieraufnahmen 152 des Seilzahnrads 15 aufgenommen sind, so dass sich das Seil 131 bei Verdrehung des Seilzahnrads 15 mitbewegt.

Figur 18 zeigt analog zu Figur 4 eine Ausgangsstellung des Schwenkbeschlags, bei der das Befestigungsteil mit der dem ersten Hebel 2 zugewandten Stirnseite 45 an den Anschlägen 34 des zweiten Hebels 3 anliegt.

Bei Verschwenkung des zweiten Hebels 3 im Uhrzeigersinn erfolgt gleichzeitig eine Verschiebung des Befestigungsteils 4 hin zum freien Ende des zweiten Hebels, wie es in Figur 19 dargestellt ist.

### Bezugszeichenliste

- 1: Schwenkbeschlag

- 2: erster Hebel
- 21: Hebelarm
- 22: Hebelkopf
- 24: Verstellmechanismus
- 25: Kraftwelle

- 3: zweiter Hebel
- 31: Hebelarm
- 32: Hebelkopf
- 33: Bohrung
- 34: Anschlag

- 4: Befestigungsteil
- 41: Befestigungselement
- 42: Koppelelement
- 421: Mitnehmeraufnahme
- 43: Aufnahmenut
- 44: Auflagefläche
- 45: Grundschenkel
- 46: Befestigungsschenkel
- 47: Bolzen

- 5: Antriebseinheit
- 51: Antriebsrad
- 52: Trägerelement
- 521: Auflagekorpus
- 522: Arm
- 53: Schraubbolzen
- 54: Einstellelement
- 55: Reibscheibe
- 56: Anpreßscheibe
- 57: Scheibe

- 6: Abdeckung
- 7: Antriebswelle
- 71: erstes Zahnrad
- 72: Ritzel
- 8: zweites Zahnrad
- 9: Kette

- 11: Niet
- 12: Niet

- 13: Seilzug
- 131: Seil
- 132: Seilzugende
- 133: Mitnehmer

- 14: elektromotorischer Antrieb

- 15: Seilzahnrad
- 151: Seilnut
- 152: Fixieraufnahme

- 16: Seilrad
- 17: Kette

- D: Achse
- V: Verstellrichtung
- L₃: Längsrichtung

- α: Winkel
- M_{Max}: Drehmoment

- 100: Möbel
- 101: Möbelkorpus
- 102: Armlehne
- 103: Armlehne

## Patentansprüche

1. Schwenkbeschlag (1), insbesondere für bewegliche Möbelteile an Möbeln, aufweisend
- einen ersten Hebel (2) und einen zweiten Hebel (3), die um eine Schwenkachse (D) aus einer Grundstellung heraus um einen vorbestimmten Winkel (a) schwenkbar zueinander gelagert sind,
- einen Verstellmechanismus (24), mit dem die beiden Hebel (2, 3) in unterschiedlichen Winkelstellungen innerhalb des vorbestimmten Winkels (a) relativ zueinander fixierbar sind,
- ein am zweiten Hebel (3) in Längsrichtung (L₃) des zweiten Hebels (3) verschiebbar gehaltenes Befestigungsteil (4),
- wobei am ersten Hebel (2) eine Antriebseinheit (5) angeordnet ist, mit der das Befestigungsteil (4) durch Verschwenken des zweiten Hebels (3) antreibbar ist,
**gekennzeichnet durch**
- einen am zweiten Hebel (3) angeordneten und mit dem Befestigungsteil (4) und der Antriebseinheit (5) gekoppelten Ketten- oder Riementrieb oder Seilzug mit einer am zweiten Hebel (3) angeordneten Antriebswelle (7) sowie einem zweiten Zahnrad (8) oder einer zweiten Seilrolle,
- wobei das Befestigungsteil (4) ein an dem beweglichen Möbelteil befestigbares Befestigungselement (41) und ein mit einer Kette (9) oder einem Riemen oder einem Seil des Ketten- oder Riementriebs oder Seilzugs gekoppeltes, am Befestigungselement (41) ortsfest fixiertes Koppelelement (42) aufweist,
- wobei die Kette (9) oder der Riemen oder das Seil des Ketten- oder Riementriebs oder Seilzugs formschlüssig oder kraftschlüssig am Koppelelement (42) festgelegt ist.

2. Schwenkbeschlag nach Anspruch 1, **dadurch gekennzeichnet, dass** die Antriebseinheit (5) als Überlastsicherung ausgebildet ist.

3. Schwenkbeschlag nach Anspruch 2, **dadurch gekennzeichnet, dass** die Antriebseinheit (5) ein auf der Schwenkachse (D) gelagertes Antriebsrad (51) aufweist, das reibschlüssig gegen Verdrehung bis zu einem vorbestimmten Drehmoment (M_{Max}) relativ zum ersten Hebel (2) gesichert ist.

4. Schwenkbeschlag nach einem der vorstehenden Ansprüche, **dadurch gekennzeichnet, dass** das Koppelelement (42) eine Aufnahmenut (43) aufweist, in der ein Abschnitt der Kette (9) oder des Riemens oder Seiles relativ zum Koppelelement ortsfest aufgenommen ist.

5. Schwenkbeschlag nach einem der Ansprüche 3 bis 4, **dadurch gekennzeichnet, dass** eine von dem Antriebsrad (51) angetriebene Antriebswelle (7) des Ketten- oder Riementriebs oder Seilzugs ein Zahnrad (71) oder eine Seilrolle und ein Ritzel (72) aufweist, wobei das Ritzel (72) mit dem Antriebsrad (51) kämmt.

6. Schwenkbeschlag nach einem der vorstehenden Ansprüche 3 bis 5, **dadurch gekennzeichnet, dass** die Antriebseinheit (5) ein das Antriebsrad (51) tragendes Trägerelement (52), eine mit dem Antriebsrad (51) zusammenwirkende Reibscheibe (55), sowie Einstellmittel zur Einstellung eines maximalen Drehmoments aufweist.

7. Schwenkbeschlag nach Anspruch 6, **dadurch gekennzeichnet, dass** das Trägerelement (52) einen Auflagekorpus (521) zur Auflage des Antriebsrades (51) und einen sich von dem Auflagekorpus radial erstreckenden, am ersten Hebel (2) befestigten Arm (522) aufweist.

8. Schwenkbeschlag nach einem der vorstehenden Ansprüche, **dadurch gekennzeichnet, dass** am zweiten Hebel (3) wenigstens ein eine Ausgangsstellung des Befestigungsteils (4) definierender Anschlag (34) angeordnet ist.

9. Schwenkbeschlag nach einem der vorstehenden Ansprüche, **gekennzeichnet durch** einen elektromotorischen Antrieb als Verstellmechanismus.

10. Schwenkbeschlag nach einem der vorstehenden Ansprüche 3 bis 9, **dadurch gekennzeichnet, dass** am zweiten Hebel (3) eine Abdeckung (6) angeordnet ist, welche den Ketten- oder Riementrieb oder Seilzug und/oder das Antriebsrad (51) abdeckt.

11. Schwenkbeschlag nach Anspruch 1, **dadurch gekennzeichnet, dass** die Antriebseinheit (5) ein drehfest mit dem ersten Hebel (2) gekoppeltes, als Kettenradscheibe oder Riemenscheibe ausgebildetes Antriebsrad (51) und ein über eine Kette (17) oder einen Riemen mit der Kettenradscheibe oder Riemenscheibe gekoppeltes Seilzahnrad (15) aufweist, wobei das Seilzahnrad (15) über einen Seilzug (13) mit einem Seilrad (16) verbunden ist.

12. Möbel (100) mit einem Schwenkbeschlag (1) nach einem der vorhergehenden Ansprüche.

13. Möbel (100) nach Anspruch 12, **dadurch gekennzeichnet, dass** der Schwenkbeschlag (1) eine Armlehne (103) oder Kopfstütze oder andere verstellbare Möbelteile an einem Möbelkorpus (101) eines als Polstermöbel ausgebildeten Möbels (100) verstellbar fixiert.

## Claims

1. A pivot fitting (1), in particular for movable furniture part on items of furniture, comprising
- a first lever (2) and a second lever (3) which are mounted so they are pivotable in relation to one another about a pivot axis (D) out of a base position by a predetermined angle (a),
- an adjustment mechanism (24), using which the two levers (2, 3) are fixable in relation to one another in different angle positions within the predetermined angle (a),
- a fastening part (4) held so it is displaceable on the second lever (3) in the longitudinal direction (L₃) of the second lever (3),
- wherein a drive unit (5) is arranged on the first lever (2), with which the fastening part (4) is drivable by pivoting the second lever (3),
**characterized by**
- a chain or belt drive or cable pull, which is arranged on the second lever (3) and is coupled to the fastening part (4) and the drive unit (5), having a driveshaft (7) as well as a second gear wheel (8) located at the second lever (3) or a second cable roll,
- wherein the fastening part (4) has a fastening element (41) fastenable on the movable furniture part and a fixed coupling element (42), which is coupled to a chain (9) or a belt or a cable of the chain or belt drive or cable pull, and is fixed in place on the fastening element (41),
- wherein the chain (9) or the belt or the cable of the chain or belt drive or cable pull is fixed in a formfitting or friction-locked manner on the coupling element (42).

2. The pivot fitting according to claim 1, **characterized in that** the drive unit (5) is designed as an overload safe guard.

3. The pivot fitting according to Claim 2, **characterized in that** the drive unit (5) has a drive wheel (51) mounted on the pivot axis (D), which is secured in a friction-locked manner in relation to the first lever (2) against pivoting up to a predetermined torque (M_{Max}).

4. The pivot fitting according to any one of the preceding claims, **characterized in that** the coupling element (42) has a receptacle groove (43), in which a section of the chain (9) or the belt or cable is accommodated fixed in place in relation to the coupling element.

5. The pivot fitting according to any one of Claims 3 to 4, **characterized in that** a driveshaft (7), which is driven by the drive wheel (51), of the chain or belt drive or cable pull has a gear wheel (71) or a cable roll and a pinion (72), wherein the pinion (72) meshes with the drive wheel (51).

6. The pivot fitting according to any one of preceding Claims 3 to 5, **characterized in that** the drive unit (5) has a carrier element (52) bearing the drive wheel (51), a friction disk (55), which interacts with the drive wheel (51), and setting means for setting a maximum torque.

7. The pivot fitting according to Claim 6, **characterized in that** the carrier element (52) has a support body (521) for supporting the drive wheel (51) and an arm (522), which extends radially from the support body and is fastened on the first lever (2).

8. The pivot fitting according to any one of the preceding claims, **characterized in that** at least one stop (34), which defines a starting position of the fastening part (4), is arranged on the second lever (3).

9. The pivot fitting according to any one of the preceding claims, **characterized by** an electromotive drive as the adjustment mechanism.

10. The pivot fitting according to any one of the preceding Claims 3 to 9, **characterized in that** a cover (6), which covers the chain or belt drive or cable pull and/or the drive wheel (51), is arranged on the second lever (3).

11. The pivot fitting according to claim 1, **characterized in that** the drive unit (5) comprises a drive wheel (51), which is coupled to the first lever (2) in a rotatably fixed manner and is in the form of a sprocket wheel disc or belt pulley, and a cable gear wheel (15) coupled to the sprocket wheel disc or belt disc via a chain (17) or a belt, wherein the cable gear wheel (15) is connected to the cable wheel (16) via a cable pull.

12. An item of furniture (100) comprising a pivot fitting (1) according to any one of the preceding claims.

13. The item of furniture (100) according to Claim 12, **characterized in that** the pivot fitting (1) adjustably fixes an armrest (103) or headrest or other adjustable furniture parts on a furniture body (101) of an item of furniture (100) designed as upholstered furniture.

## Revendications

1. Ferrure pivotante (1) notamment pour des parties mobiles de meubles comprenant :
- un premier levier (2) et un second levier (3) montés pivotant l'un par rapport à l'autre autour d'un axe de pivotement (D) à partir d'une position de base selon un angle (α) prédéfini,
- un mécanisme de réglage (24) fixant les deux leviers (2, 3) l'un par rapport à l'autre dans différentes positions angulaires dans l'angle (a) prédéfini,
- une pièce de fixation (4) montée de manière coulissante sur le second levier (3) dans la direction longitudinale (L3) du second levier (3),
- une unité d'entraînement (5) équipant le premier levier (2) qui entraîne la pièce de fixation (4) par le pivotement du second levier (3),
ferrure **caractérisée en ce qu'**elle comprend :
- un entraînement par chaîne ou courroie ou câble de traction, monté sur le second levier (3) et couplé avec la pièce de fixation (4) et l'unité d'entraînement (5), à l'arbre d'entraînement (7) du second levier (3) ainsi qu'une seconde roue dentée (8) ou une seconde poulie,
* la pièce de fixation (4) comportant un élément de fixation (41) qui se fixe sur la partie mobile de meuble et un élément de couplage (42) monté de manière fixe sur l'élément de fixation (41) et couplé par une chaîne (9) ou une courroie ou un câble de l'entraînement par chaîne ou courroie ou câble de traction,
* la chaîne (9) ou la courroie ou le câble de l'entraînement par chaîne ou par courroie ou du câble de traction est fixé à l'élément de couplage (42) par une liaison par la forme ou par la force.

2. Ferrure pivotante selon la revendication 1,
**caractérisée en ce que**
l'unité d'entraînement (5) est réalisée comme sécurité de surcharge.

3. Ferrure pivotante selon la revendication 2,
**caractérisée en ce que**
l'unité d'entraînement (5) comporte une roue d'entraînement (5) montée sur l'axe de pivotement (D), et qui est retenue par une liaison par frottement contre le pivotement par rapport au premier levier (2) jusqu'à un couple prédéfini (M_{Max}).

4. Ferrure pivotante selon l'une des revendications précédentes,
**caractérisée en ce que**
l'élément de couplage (42) comporte une rainure de réception (43) qui reçoit un segment de la chaîne (9) ou de la courroie ou du câble, de manière fixe par rapport à l'élément de couplage.

5. Ferrure pivotante selon l'une des revendications 3 à 4,
**caractérisée en ce que**
la roue d'entraînement (7) de l'entraînement par chaîne ou courroie ou par câble de traction comporte une roue dentée (71) ou une poulie ou un pignon (72), le pignon (72) engrènant avec la roue d'entraînement (51).

6. Ferrure pivotante selon l'une des revendications 3 à 5,
**caractérisée en ce que**
l'unité d'entraînement (5) comporte un élément de support (52) portant la roue d'entraînement (51), une rondelle de frottement (55) coopérant avec la roue d'entraînement (51) ainsi qu'un moyen de réglage pour régler le couple maximum.

7. Ferrure pivotante selon la revendication 6,
**caractérisée en ce que**
l'élément de support (52) comporte un organe d'appui (521) pour recevoir la roue d'entraînement (51) et un bras (522) fixé au premier levier (2) et s'étendant radialement à partir de l'organe d'appui.

8. Ferrure pivotante selon l'une des revendications précédentes,
**caractérisée en ce qu'**
le second levier (3) a une butée (34) définissant une position de sortie de la pièce de fixation (4).

9. Ferrure pivotante selon l'une des revendications précédentes,
**caractérisée par** un entraînement par moteur électrique comme mécanisme de réglage.

10. Ferrure pivotante selon l'une des revendications 3 à 9,
**caractérisée en ce que**
le second levier (3) comporte un capot (6) qui couvre l'entraînement par chaîne ou courroie ou câble de traction et/ou la roue d'entraînement (51).

11. Ferrure pivotante selon la revendication 1,
**caractérisée en ce que**
l'unité d'entraînement (5) comporte une roue d'entraînement (51) couplée solidairement en rotation à un premier levier (2) et constituant une roue à chaîne ou une poulie et une roue dentée de câble (15) couplée par une chaîne (17) ou une courroie à la roue à chaîne ou à la poulie, la roue dentée de câble (15) étant reliée à la roue de câble (16) par un câble de traction (13).

12. Meuble (100) portant une ferrure pivotante (1) selon l'une des revendications précédentes.

13. Meuble (100) selon la revendication 12,
**caractérisé en ce que**
la ferrure pivotante (1) relie de manière réglable un accoudoir (103) ou un appui-tête ou autre partie réglable de meuble sur le corps (101) d'un meuble (100) en forme de meuble rembourré.
